# FASCICULE DE BREVET EUROPEEN

(11) **EP 0 465 279 B1**
(45) Date de publication et mention de la délivrance du brevet: **09.08.1995**
(21) Numéro de dépôt: 91401361.0
(22) Date de dépôt: 28.05.1991
(51) Int. Cl.: F15B 20/00, F15B 21/08, B62D 7/14

(54) **Dispositif de commande d'un vérin hydraulique**
Steuereinrichtung für einen Arbeitszylinder
Control device for a hydraulic actuator

(30) Priorité: 29.06.1990 FR 9008221
(43) Date de publication de la demande: 08.01.1992
(73) Titulaire: ALLIEDSIGNAL EUROPE SERVICES TECHNIQUES, 93700 Drancy (FR)
(72) Inventeur: Kervagoret, Gilbert, F-93700 Drancy (FR); Lebret, Pierre, F-93700 Drancy (FR)
(74) Mandataire: Bentz, Jean-Paul

(56) Documents cités:
- EP-A- 0 334 723
- DE-A- 3 811 312
- PATENT ABSTRACTS OF JAPAN vol. 11, no. 269 (M-621)(2716) 02 septembre 1987,& JP-A-62 71758 (DAIHATSU MOTOR CO LTD) 02 avril 1987,

## Description

La présente invention est relative à un dispositif de commande d'un vérin hydraulique, du type comprenant dans un circuit principal un ensemble distributeur commandé par des moyens électriques, comprenant pour chaque chambre du vérin une électrovanne à trois voies et un clapet commandé commandant la mise en relation de chacune des deux chambres du vérin sélectivement à une source de fluide sous haute pression ou à un réservoir de fluide à basse pression, et un circuit auxiliaire commandé par des moyens sensibles à la position du piston du vérin.

Dans de nombreuses applications, il est souhaitable que, en cas de défaillance, le piston du vérin revienne automatiquement en position de repos, par exemple en position médiane dans le cas d'un vérin à double effet. On connaît par EP-A-0 334 723 un dispositif de commande de vérin hydraulique à double effet dans lequel, selon un mode de réalisation, une défaillance dans le circuit hydraulique sous haute pression entraîne le blocage du piston du vérin dans la position qu'il occupait avant la défaillance. Un autre mode de réalisation n'est prévu que pour la défaillance du circuit de commande électrique et exige le montage d'un dispositif de détection de la position du piston du vérin, et donc de munir le vérin de deux bouchons de forme complexe aux travers desquels passe la tige de sortie du vérin et équipés de distributeurs. Les tiroirs de ces distributeurs doivent être usinés avec une très grande précision, typiquement de l'ordre du micron, et de plus doivent être appairés très précisément pour assurer la parfaite symétrie du dispositif. En effet, en cas de défaillance, chaque distributeur doit être capable d'assurer l'arrivée de fluide sous pression dans une des chambres du vérin tandis que l'autre distributeur doit permettre l'évacuation d'exactement le même volume du fluide contenu dans l'autre chambre vers un réservoir à basse pression, pour que le mouvement de retour du piston du vérin soit assuré en toute sécurité.

L'invention a donc pour objet un dispositif de commande d'un vérin hydraulique dans lequel le retour du piston en position de repos soit assuré de façon automatique en cas de défaillance sans modifications du vérin lui-même, de façon simple et fiable, et sans nécessiter d'usinage coûteux.

Dans ce but, l'invention prévoit que, en cas de défaillance, la mise en relation d'une des chambres du vérin à la source de fluide sous haute pression est assurée par le circuit auxiliaire commandant l'un des clapets commandés du circuit principal, la mise en relation de l'autre chambre du vérin avec le réservoir de fluide à basse pression étant assurée par le circuit principal commandé par le circuit auxiliaire, pour provoquer le retour du piston du vérin dans sa position de repos.

D'autres caractéristiques et avantages de la présente invention ressortiront de la description suivante d'un mode de réalisation donné à titre d'exemple, faite en relation avec les dessins annexés sur lesquels :
- la Figure 1 représente un schéma théorique d'un mode de réalisation de l'invention,
- la Figure 2 représente un schéma théorique d'une variante du mode de réalisation de la Figure 1,
- la Figure 3 représente un schéma théorique d'une autre variante du mode de réalisation de la Figure 1,
- la Figure 4 représente un schéma théorique d'une troisième variante du mode de réalisation de la Figure 1,
- la Figure 5 représente un schéma théorique d'une quatrième variante du mode de réalisation de la Figure 1.

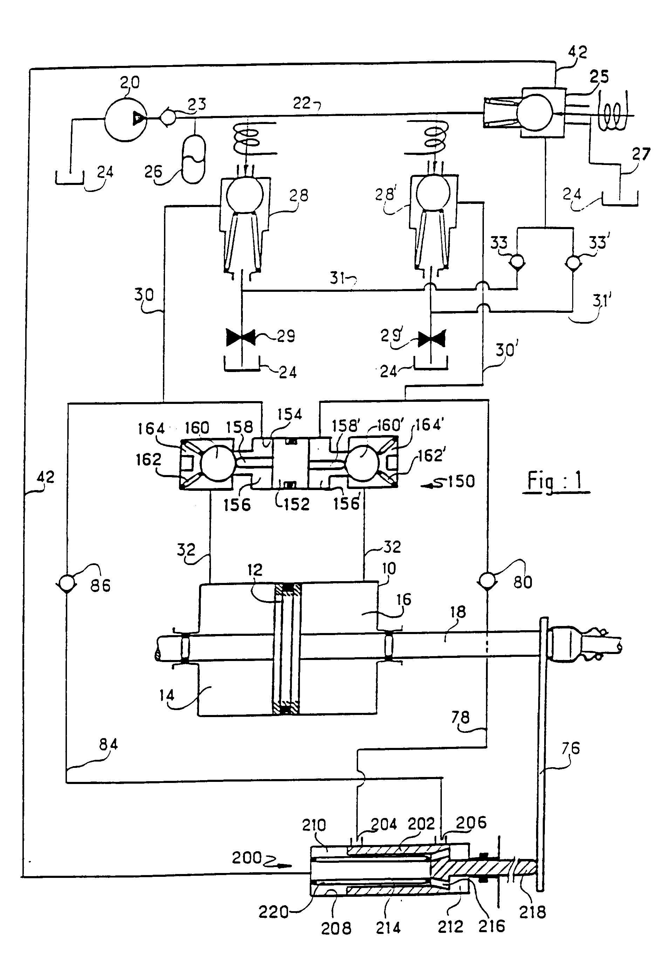

On a représenté sur la Figure 1 un vérin à double effet 10 divisé par un piston 12 en deux chambres 14 et 16, de volume variable. Le piston est monté sur une tige 18. L'alimentation hydraulique est assurée par une pompe 20, reliée à une conduite d'alimentation 22 à travers un clapet anti-retour 23. La conduite d'alimentation 22 est également reliée à un accumulateur de pression 26.

Le circuit de commande principal totalement symétrique comprend, pour la chambre 14, une électrovanne à trois voies 28, qui met en communication une conduite 30, soit avec la conduite haute pression 22, soit avec un réservoir 24. Lorsque l'électrovanne 28 n'est pas excitée, elle met la conduite 30 en communication avec le réservoir 24. Le circuit de commande principal comprend de même, pour la chambre 16, une électrovanne à trois voies 28′ qui met en communication une conduite 30', soit avec la conduite haute pression 22, soit avec le réservoir 24. Lorsque l'électrovanne 28′ n'est pas excitée, elle met la conduite 30′ en communication avec le réservoir 24.

Le circuit de commande principal peut être commandé par un calculateur ou un microprocesseur (non représenté) qui commande chacune des électrovalves 28,28′, la pompe 20, ainsi qu'une électrovanne de sécurité 25 placée entre la conduite haute pression 22 et le réservoir basse pression 24 par l'intermédiaire d'une conduite 27. En temps normal, l'électrovanne 25 est excitée de façon continue à la mise en route du dispositif et interrompt la communication entre la conduite haute pression 22 et le réservoir 24. Le rôle de cette électrovanne 25 sera explicité par la suite.

Les conduites 30 et 30′ sont reliées à des conduites 32 et 32′ respectivement d'alimentation des chambres 14 et 16 du vérin 10 par l'intermédiaire d'un clapet commandé à double effet 150.

Le clapet 150 est constitué d'un piston 152 coulissant de façon étanche dans un alésage 154 et le séparant en deux chambres 156 et 156′ dans lesquelles débouchent les conduites 30 et 30′. Le piston 152 porte de chaque côté un pointeau 158 et 158′ susceptible de soulever une bille 160,160′ hors de son siège contre l'action d'un ressort 162,162′, pour établir ou interrompre la communication entre les chambres 156 et 156′ avec des chambres 164 et 164′ dans lesquelles débouchent les conduites 32 et 32′.

Si on désire par exemple que le piston du vérin se déplace vers la droite en considérant la Figure 1, la pompe 20 est mise en oeuvre, l'électrovanne 28 est excitée, l'électrovanne 28′ est laissée au repos et l'électrovanne 25 de sécurité est excitée. La pression dans la conduite 22 est donc transmise par la conduite 30 dans la chambre 156 et fait se soulever la bille 160 de son siège de sorte que le fluide sous pression peut être admis dans la chambre 14 du vérin par la chambre 164 et la conduite 32. Simultanément, la pression dans la chambre 156 agit sur le piston 152 qui se déplace (vers la droite sur la Figure 1), et le pointeau 158′ soulève la bille 160′, de sorte que les chambres 156′ et 164′ communiquent, et permettent au fluide contenu dans la chambre 16 du vérin de s'écouler vers le réservoir 24 via les conduites 32′ et 30′ et l'électrovalve 28′ en position de repos. Une restriction 29′ étant disposée entre l'électrovalve 28′ et le réservoir 24, le fluide s'écoule alors dans une conduite 31′ et un clapet anti-retour 33′ vers l'électrovanne 25 en position excitée et vers le réservoir 24 par la conduite 27.

En cas de défaillance hydraulique, les billes 160 et 160′ restent sur leur siège sous l'action des ressorts 162 et 162′, les chambres 14 et 16 du vérin sont donc isolées l'une de l'autre et du reste du circuit. Le piston 12 conserve donc la position qu'il occupait avant que ne survienne la défaillance hydraulique.

En cas de défaillance quelconque détectée par le calculateur de pilotage, le circuit auxiliaire entre en action, comme on va maintenant le décrire, pour ramener automatiquement le piston du vérin dans sa position de repos.

Cette défaillance se traduit par une coupure du circuit électrique, donc, par un arrêt du fonctionnement de la pompe 20, et les électrovannes 28,28′ et 25 ne sont plus excitées. L'électrovanne 25 se trouve donc en position de repos et ouvre la communication entre la conduite haute pression 22 et une conduite 42 qui, lorsque l'électrovanne 25 était excitée, communiquait avec le réservoir 24. Ce faisant, l'électrovanne 25 interrompt la communication entre le réservoir 24 et la conduite 42. La conduite 42 relie alors l'accumulateur de pression 26 avec un distributeur 200.

Le distributeur 200 est constitué par un tiroir 202 à une seule portée coopérant avec deux orifices 204 et 206. Le tiroir 202 coulisse dans un alésage 208, et divise ce dernier en deux chambres 210 et 212 ; il est percé d'un alésage borgne 214 et des perçages 216 pratiqués au fond de l'alésage 214 font communiquer les chambres 210 et 212 et permettent le mouvement du tiroir 202. Le tiroir 202 est commandé par une tige 218 coopérant avec un organe 76 solidaire de la tige de sortie 18 du vérin, sous l'action d'un ressort de rappel 220. Lorsque le piston 12 du vérin est dans sa position de repos, le tiroir 202 recouvre les orifices 204 et 206, et son déplacement dans un sens ou dans l'autre découvre l'un de ces orifices. L'orifice 204 est relié par une conduite 78 et un clapet anti-retour à la chambre 156′ du clapet double 150, et l'orifice 206 est relié par une conduite 84 et un clapet anti-retour 86 à la chambre 156 du clapet double 150. La conduite 42 en sortie de l'électrovanne 25 est raccordée à la chambre 210 du distributeur 200.

En supposant que le piston 12 est déplacé vers la droite sur la Figure 1 et qu'une défaillance survient, l'accumulateur 26 se décharge par la conduite 42 dans la chambre 210. Le tiroir 202 étant lui aussi déplacé vers la droite sous l'action du ressort 220, découvre l'orifice 204 et recouvre l'orifice 206. La pression dans la chambre 210 est donc transmise par la conduite 78 et le clapet anti-retour 80 à la chambre 156′ du clapet double 150, soulève la bille 160′ et parvient ainsi dans la chambre 16 du vérin, tandis qu'elle déplace le piston 152 vers la gauche, ce qui a pour effet de soulever la bille 160 et de relier la chambre 14 au réservoir via l'électrovalve 28 et la restriction 29, le clapet anti-retour 33 étant non passant puisque son autre entrée est soumise directement à la pression supérieure régnant dans l'accumulateur 26.

La pression dans la conduite 78 est également transmise par la conduite 30′ à l'électrovanne 28′ en position de repos, et le fluide sous pression rencontre donc sur son passage soit la restriction 29′, soit le clapet anti-retour 33′, qui est alors non passant puisque son autre entrée est soumise directement à la pression supérieure régnant dans l'accumulateur 26.

Le piston 12 peut donc se déplacer sous l'effet de la différence des pressions s'exerçant sur ses deux faces, jusqu'à ce qu'il revienne dans sa position de repos, les restrictions 29 et 29′ assurant l'amortissement du retour du piston du vérin. Dans son mouvement, il entraîne l'organe 76 et le tiroir 202 qui, dans cette position de repos, interrompt la fourniture de fluide sous pression aux deux chambres du vérin puisqu'il obture alors les deux orifices 204 et 206. Le piston 12 du vérin se trouve donc ainsi verrouillé dans sa position de repos.

On voit donc que, grâce à l'invention, une coupure de l'alimentation électrique volontaire ou provoquée à la suite d'une défaillance, se traduit automatiquement et dans tous les cas par la fourniture de fluide sous pression de l'accumulateur 26 vers la chambre du vérin appropriée par l'intermédiaire du distributeur 200 alimentant le circuit principal par le clapet à double effet 150, tandis que le fluide contenu dans l'autre chambre du vérin peut retourner au réservoir 24 par l'intermédiaire du circuit de commande principal, à savoir le clapet à double effet 150 et l'électrovanne 28 ou 28′. Les circuits d'alimentation et d'évacuation du vérin en cas de défaillance électrique sont ainsi les mêmes qu'en cas de fonctionnement normal. Le clapet à double effet 150 est piloté par le distributeur unique 200 dont l'usinage ne nécessite plus de très faibles tolérances. L'expérience a montré que des tolérances de 20 à 30 microns, obtenues de façon courante, permettent un fonctionnement totalement satisfaisant du distributeur.

Le distributeur 200 dont le fonctionnement vient d'être décrit ne joue aucun rôle en fonctionnement normal, c'est-à-dire hors défaillance, grâce aux clapets anti-retour 80 et 86 qui permettent, en fonctionnement normal, l'alimentation de la chambre 156 ou 156' en empêchant le fluide sous pression de parvenir au distributeur 200, et en fonctionnement en défaillance, l'alimentation de la chambre 156 ou 156′ via le distributeur 200 par l'accumulateur 26.

Un avantage de l'invention est de permettre une réalisation non symétrique du distributeur. En effet il suffit que le tiroir 202 puisse suivre la course du piston du vérin dans un seul sens (vers la gauche sur la Figure), alors que sa course peut très bien être limitée dans l'autre sens, la tige de commande 218 ne suivant, grâce au ressort 220, l'organe 76 que sur une partie de son trajet, puis s'en désolidarisant sur le reste du trajet. Ceci permet une importante réduction de l'encombrement du distributeur.

Encore un autre avantage de l'invention est de pouvoir placer le distributeur 200 en un endroit quelconque par rapport au circuit de commande du vérin ou au vérin lui-même, sous la seule réserve que le tiroir soit commandé par un organe suivant les mouvements du piston du vérin.

Un avantage supplémentaire de l'invention est de pouvoir réguler les vitesses de déplacement du piston du vérin, indépendamment pour les phases de fonctionnement normal et en défaillance, par le choix des sections d'écoulement 27 et 29-29′ respectivement qui assurent un mouvement plus lent en mode défaillance qu'en mode normal.

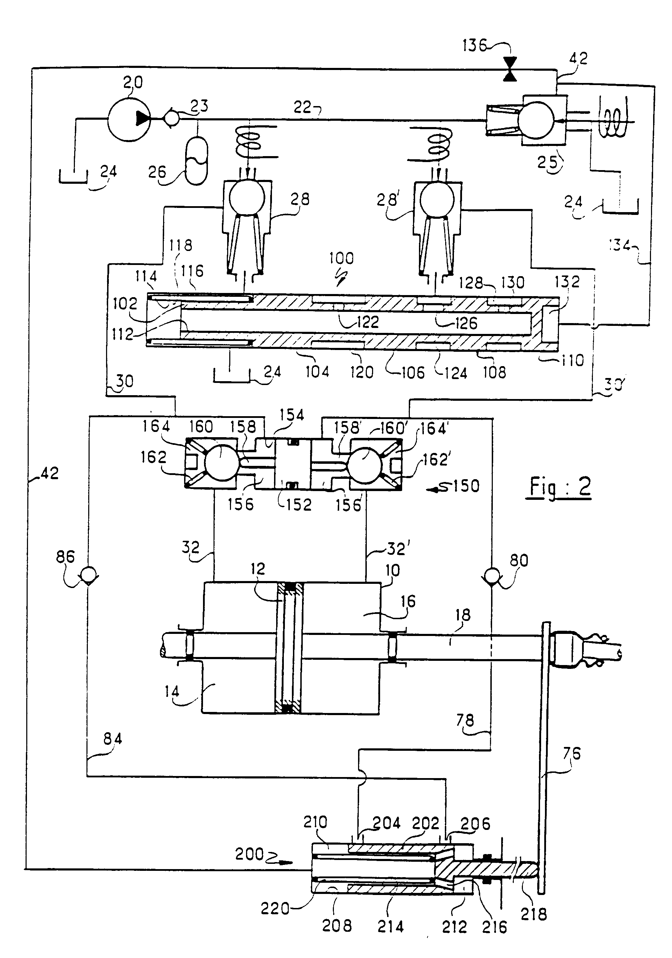

On a représenté sur la Figure 2 une variante du mode de réalisation de la Figure 1, où les mêmes éléments sont affectés des mêmes références numériques. Le fonctionnement du dispositif de la Figure 2 est identique, en mode normal ou en cas de défaillance, à celui de la Figure 1 et ne sera donc pas explicite en détail. La différence réside dans l'adjonction d'un distributeur 100 dans le circuit entre les électrovannes 28 et 28′ et le réservoir 24. Le distributeur 100 est composé d'un tiroir 102 à quatre portées 104,106,108 et 110 et formé intérieurement avec un alésage borgne 112. Le tiroir 102 coulisse dans un alésage 114 et est rappelé en position de repos par un ressort 116.

La portée 104 définit avec l'alésage 114 une chambre 118 dans laquelle se trouve le ressort 116, et qui communique avec le réservoir 24 et l'intérieur de l'alésage 112. Les portées 104 et 106 définissent entre elles une chambre annulaire 120 communiquant avec l'intérieur de l'alésage borgne 112 par un perçage 122 faisant office de restriction. Les portées 106 et 108 définissent entre elles une chambre annulaire 124 en communication, par une ouverture 126, avec l'intérieur de l'alésage borgne 112. Les portées 108 et 110 définissent entre elles une chambre annulaire 128 communiquant avec l'intérieur de l'alésage borgne 112 par un perçage 130 faisant office de restriction. La portée 110 définit avec l'alésage 114 une chambre 132 reliée par une conduite 134 à la conduite 42. Dans la position de repos représentée, la sortie de l'électrovanne 28 vers le réservoir 24 débouche dans la chambre 118, et la sortie de l'électrovanne 28′ vers le réservoir 24 débouche dans la chambre 124.

En fonctionnement normal, c'est à dire quand l'électrovanne 25 est excitée, on a vu que la conduite 42 est reliée au réservoir 24. Il en est donc ainsi de la conduite 134 et de la chambre 132. L'électrovanne 28 ou 28′ qui n'est pas excitée met donc la chambre commandée 14 ou 16 respectivement en communication avec le réservoir 24 par l'intermédiaire de la chambre 118, ou la chambre 124 l'ouverture 126 et l'alésage 112 respectivement. Tout se passe donc bien comme si le distributeur 100 n'était pas là. Dans ce cas de fonctionnement normal, la section du retour au réservoir par l'alésage 112 et/ou la chambre 118 conditionne le calibrage de l'écoulement de fluide, et donc la vitesse de déplacement du piston du vérin.

Par contre, lors d'une défaillance, l'électrovanne 25 revient en position de repos et permet à l'accumulateur 26 de se décharger dans la conduite 42. Il y a donc simultanément augmentation de pression dans la conduite 134 et dans la chambre 132. La chambre 118 étant constamment reliée au réservoir 24, le tiroir 102 est donc soumis à une différence de pression et se déplace vers la gauche (sur la Figure 2) de façon telle que la conduite venant de l'électrovanne 28 débouche dans la chambre 120 et la conduite venant de l'électrovanne 28′ débouche dans la chambre 128. Ces deux chambres 120 et 128 comportent chacune une restriction 122 et 130 respectivement menant vers l'intérieur de l'alésage 112 et le réservoir 24. Le circuit par lequel se décharge le fluide d'une des chambres 14 ou 16 du vérin présente donc, lors du fonctionnement en défaillance, une restriction 122 ou 130 ralentissant l'écoulement de fluide vers le réservoir, et donc aussi le mouvement de retour du piston 12 vers sa position de repos.

Le freinage du mouvement de retour du piston 12 peut encore être amélioré en disposant une restriction fixe 136 sur la conduite 42 en aval du raccordement avec la conduite 134. Une telle restriction 136 joue le double rôle de ralentir la fourniture de fluide sous pression au distributeur 200 et à une des chambres 14 ou 16 du vérin, et d'assurer un déplacement rapide du tiroir 102 puisque la chambre 132 reçoit alors instantanément la totalité de l'élévation de pression due à la décharge de l'accumulateur 26.

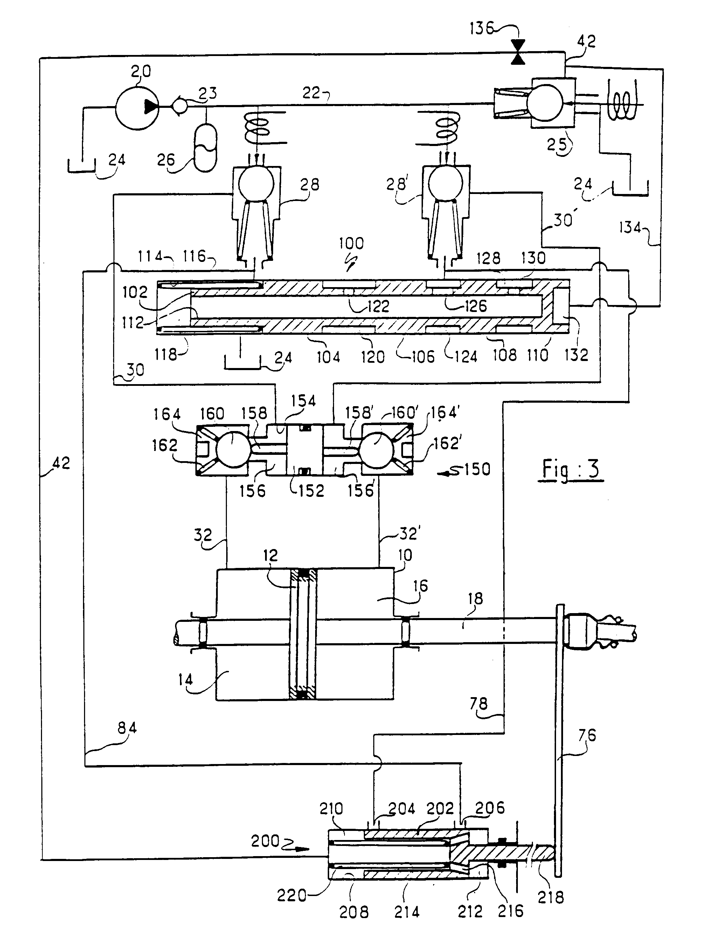

On a représenté sur la Figure 3 un circuit analogue à celui de la Figure 2, légèrement modifié de façon à supprimer les clapets anti-retour 80 et 86 et ne reliant les circuits principal et auxiliaire que par les conduites de retour au réservoir. Les éventuels défauts d'étanchéité du circuit auxiliaire n'ont alors pas d'influence sur le circuit principal. Les conduites 78 et 84, en sortie du distributeur 200, ne sont plus reliées aux conduites 30′ et 30 entre les électrovannes 28′ et 28 et le clapet double 150, mais sont reliées aux conduites reliant les électrovannes 28' et 28 au distributeur 100.

Dans des conditions normales, le fonctionnement du circuit de la Figure 3 est identique à celui de la Figure 2 et ne sera donc pas décrit en détail. Les distributeurs 100 et 200 sont tous deux reliés au réservoir 24 et ne jouent aucun rôle. Par contre, en cas de défaillance, le piston 12 se trouvant par exemple à droite sur la Figure 3, la pression libérée par l'accumulateur 26 fait basculer le tiroir 102 du distributeur 100 vers la gauche, tandis qu'elle est transmise par la conduite 42 et le distributeur 200 à la conduite 78 reliée au circuit entre l'électrovanne 28′ et le distributeur 100. Le distributeur 100 présentant dans le circuit la restriction 130 et l'électrovanne 28′ n'étant pas excitée, le fluide sous pression peut donc être transmis par l'électrovanne 28′ à la conduite 30′, aux chambres 156′ et 164′ du clapet double 150 et à la chambre 16 du vérin, le fluide contenu dans la chambre 14 étant refoulé par le clapet double 150, la bille 160 étant soulevée hors de son siège par le pointeau 158 sous l'effet de la pression dans la chambre 156′, via l'électrovanne 28 non excitée et la restriction 122 vers le réservoir 24.

On voit donc bien, que comme dans le mode de réalisation de la Figure 2, en fonctionnement normal, les chambres 156 ou 156′, et donc les chambres 14 ou 16, sont alimentées sans que le distributeur 200 ne le soit, et en défaillance, les chambres 156 ou 156′ sont alimentées, via les distributeurs 200 et 100, ce dernier présentant les restrictions 122 ou 130, par l'accumulateur 26.

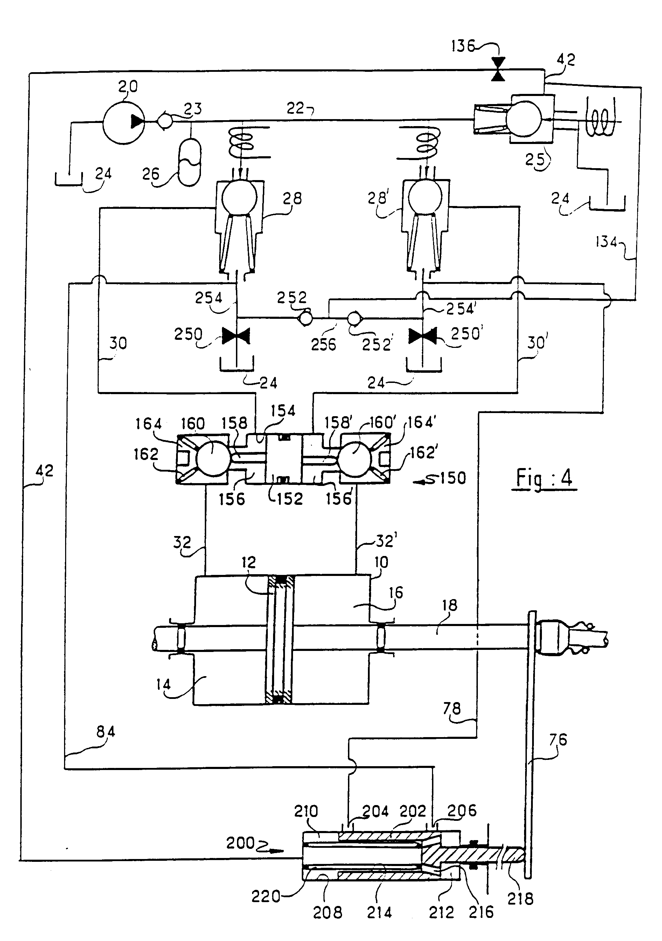

On a représenté sur la Figure 4 un circuit analogue aux précédents, dans lequel la fonction de freinage du mouvement de retour du piston du vérin dans sa position médiane de repos est assurée de façon différente de celle des Figures 2 et 3, c'est-à-dire un circuit dans lequel le distributeur 100 a été supprimé et remplacé par des restrictions fixes 250 et 250′ et des clapets anti-retour 252 et 252′, d'une façon identique à celle qui a été exposée en relation avec le mode de réalisation de la Figure 1 avec les restrictions 29 et 29′ et les clapets 33 et 33′, la liaison entre circuit principal et circuit auxiliaire étant réalisée comme sur la Figure 3 au niveau des conduites de retour au réservoir.

En fonctionnement normal, l'actionnement du vérin 10 est identique à celui qui a été décrit précédemment. Une des chambres du vérin, par exemple la chambre 16, est alimentée en fluide sous pression par excitation de l'électrovanne 28′ et les chambres 156′ et 164′ du clapet à double effet 150, tandis que la chambre 14 est reliée au réservoir 24 par la conduite 32, les chambres 164 et 156 du clapet 150, la conduite 30, l'électrovanne 28, le clapet anti-retour 252, la conduite 134 et l'électrovanne 25.

En cas de défaillance, le piston du vérin ayant été par exemple déplacé vers la droite de la Figure 4, le fluide sous pression emmagasiné dans l'accumulateur 26 est délivré, via l'électrovanne 25, aux conduites 42 et 134.

Par la conduite 42, le fluide est amené au distributeur 200 dont le tiroir 202 est lui aussi déplacé vers la droite, découvrant ainsi l'orifice 204. Le fluide sous pression est donc amené par la conduite 78 à une conduite 254′ entre l'électrovanne 28′ et la restriction 250′. L'électrovanne 28′ permet le passage du fluide, par la conduite 30′, vers les chambres 156′ et 164′ du clapet 150, et donc, par la conduite 32′, vers la chambre 16 du vérin, alors que la restriction 250′ n'autorise qu'un faible débit de fluide vers le réservoir 24. La chambre 14 est reliée au réservoir 24 par la conduite 32, les chambres 164 et 156 du clapet 150, la conduite 30, le clapet 28, la conduite 254 et la restriction 250.

Par la conduite 134, le fluide sous pression est également transmis à la conduite 256 reliant les clapets anti-retour 252 et 252′ montés en opposition. Ainsi, dans le circuit d'alimentation de la chambre 16 du vérin tel que décrit ci-dessus, la pression dans la conduite 256 est toujours supérieure à celle qui règne dans la conduite 254′. Le clapet 252′ est donc fermé, obligeant donc le fluide sous pression à parcourir le circuit décrit ci-dessus. De même, dans le circuit d'évacuation de la chambre 14, la pression dans la conduite 256 est toujours supérieure à celle qui règne dans la conduite 254, d'où la fermeture du clapet 252 et le passage forcé du fluide vers le réservoir à travers la restriction 250.

On obtient donc bien, comme dans les modes de réalisation précédents, et de façon simple, un dispositif de rappel du piston du vérin dans sa position de repos en cas de défaillance, dans lequel le freinage du mouvement de retour du piston du vérin dans sa position de repos n'entre en action que lors d'une défaillance des moyens de commande électrique.

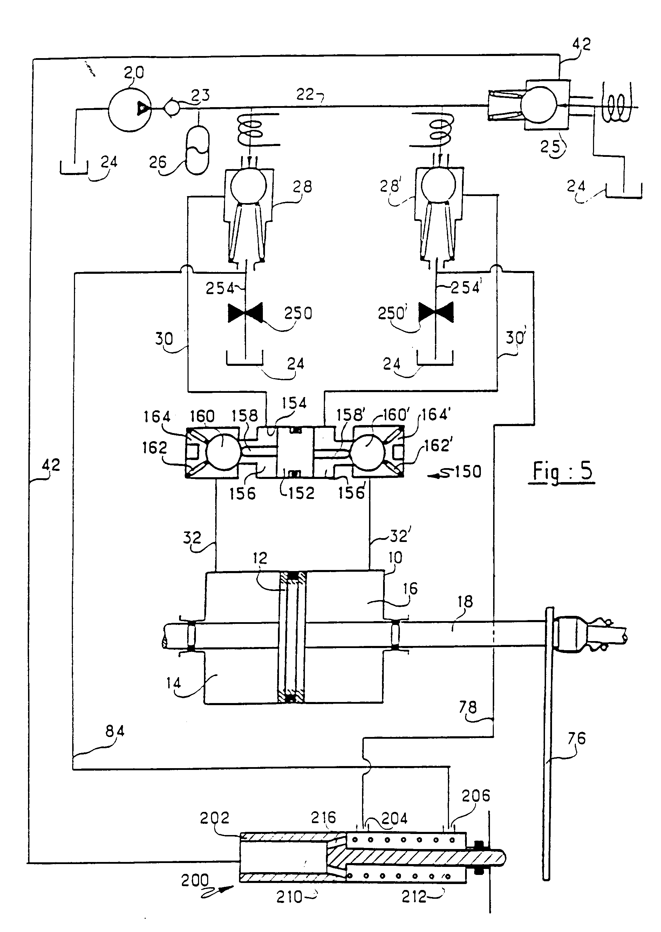

Un tel dispositif peut être obtenu de façon encore plus simple, ainsi qu'on l'a représenté sur la Figure 5. Cette dernière diffère de la Figure 4 en ce que les clapets anti-retour 252 et 252′, et par conséquent les conduites 256 et 134 ont été supprimés, et en ce que le distributeur 200 a été légèrement modifié, avec les conséquences qui vont maintenant être décrites.

En fonctionnement normal, par exemple pour amener le piston 12 du vérin 10 vers la gauche de la Figure 5, l'électrovanne 28′ est excitée et comme précédemment, le fluide sous pression est communiqué à la chambre 16 du vérin par la conduite 30′, les chambres 156′ et 164′, et la conduite 32′, la chambre 14 du vérin étant reliée au réservoir 24 par la conduite 32, les chambres 164 et les chambres 156, la conduite 30. La restriction 250 freinant le passage du fluide vers le réservoir 24, le fluide aura alors tendance à emprunter la conduite 84 pour parvenir à la chambre 212 du distributeur 200, puis, par l'orifice 216 et la chambre 210, à la conduite 42 et l'électrovanne 25 puis au réservoir 24. On comprend ainsi que le tiroir 202, en fonctionnement normal, est toujours sollicité vers la gauche (sur la Figure 5).

En cas de défaillance des moyens de commande électrique, le piston du vérin ayant été par exemple déplacé vers la droite sur la Figure 5, le fluide sous pression emmagasiné dans l'accumulateur 26 est délivré, via l'électrovanne 25, à la conduite 42 et à la chambre 210 du distributeur 200 dont le tiroir 202 se déplace sous l'effet de la pression vers la droite sur la Figure 5 jusqu'à ce que sa tige de commande 218 vienne en butée contre l'organe 76. Dans ce mouvement, le tiroir 202 vient recouvrir l'orifice 206 et découvrir l'orifice 204, permettant la transmission du fluide sous pression à la conduite 78, l'électrovanne 28′, grâce à la présence de la restriction 250′, la conduite 30′, les chambres 156′ et 164′ du distributeur 150, la conduite 32′ et la chambre 16 du vérin pour commander le retour du piston 12 dans sa position de repos. La chambre 14 du vérin est alors reliée au réservoir 24 par la conduite 32, les chambres 164 et 156 du distributeur 150, la conduite 30, l'électrovanne 28 et la restriction 250, puisque la conduite 84 mène à l'orifice 206 qui est obturé par le tiroir 202 du distributeur 200 tant que le piston 12 du vérin n'est pas revenu dans sa position de repos.

On obtient donc bien, comme dans les modes de réalisation précédents, et de façon simple et fiable, un dispositif de rappel du piston du vérin dans sa position de repos en cas de défaillance des moyens de commande électrique, où le freinage du mouvement de retour du piston du vérin n'est effectif que lors de cette défaillance, et, comme dans les modes de réalisation précédents, sans modification du vérin lui-même, et sans nécessiter d'usinage coûteux.

Bien que décrite en relation avec plusieurs modes de réalisation, l'invention est susceptible de recevoir de nombreuses modifications qui apparaîtront à l'homme de l'art. C'est ainsi que, par exemple, le tiroir du distributeur 200 peut suivre les mouvements du piston 12 du vérin 10 par l'intermédiaire d'une démultiplication ou d'un levier de façon à réduire encore l'encombrement du distributeur 200. De même, l'invention, plus particulièrement décrite en relation avec des vérins à double effet s'applique également aux vérins à simple effet.

## Revendications

1. Dispositif de commande d'un vérin (10) hydraulique à double effet comprenant, dans un circuit principal, un ensemble distributeur (28, 28', 150) commandé par des moyens électriques, comprenant pour chaque chambre (14, 16) du vérin (10) une électrovanne (28, 28') à trois voies et un clapet commandé (160, 160') commandant la mise en relation de chacune des deux chambres (14,16) du vérin (10) sélectivement à une source de fluide sous haute pression (20,26) ou à un réservoir de fluide à basse pression (24), et un circuit auxiliaire (42, 200, 78, 84) commandé par des moyens (76) sensibles à la position du piston (12) du vérin, caractérisé en ce que, en cas de défaillance, la mise en relation d'une des chambres (14, 16) du vérin (10) à la source de fluide sous haute pression (26) est assurée par le circuit auxiliaire (42, 200, 78, 84) commandant l'un des clapets commandés (160, 160') du circuit principal, la mise en relation de l'autre chambre du vérin avec le réservoir de fluide à basse pression (24) étant assurée par le circuit principal commandé par le circuit auxiliaire, pour provoquer le retour du piston (12) du vérin (10) dans sa position de repos.

2. Dispositif selon la revendication 1, caractérisé en ce que l'ensemble distributeur (28, 28', 150) du circuit principal est commandé par un distributeur (200) à tiroir (202) dans le circuit auxiliaire.

3. Dispositif selon la revendication 2 caractérisé en ce que la position du tiroir (202) du distributeur (200) est commandée par la position du piston (12) du vérin (10).

4. Dispositif selon la revendication 3, caractérisé en ce que le tiroir (202) du distributeur (200) possède une portée unique coopérant avec deux orifices (204, 206) reliés par des canalisations (78, 84) à l'ensemble distributeur (28, 28', 150) du circuit principal.

5. Dispositif selon la revendication 1, caractérisé en ce que les clapets commandés (160, 160') de l'ensemble distributeur (28, 28', 150) du circuit principal font partie d'un clapet commandé à double effet (150).

6. Dispositif selon la revendication 5, caractérisé en ce que le clapet commandé à double effet (150) est constitué d'un piston (152) séparant de façon étanche un alésage (154) en deux premières chambres (156,156′), le piston (152) comportant des moyens (158,160,162; 158′,160′,162′) pour sélectivement établir ou interrompre la communication entre les premières chambres (156,156′) et des secondes chambres (164,164′).

7. Dispositif selon la revendication 6, caractérisé en ce que les premières chambres (156,156′) sont reliées chacune à une voie des électrovannes (28,28′), et en ce que les secondes chambres (164,164′) sont reliées chacune à une chambre (14,16) du vérin (10).

8. Dispositif selon l'une quelconque des revendications précédentes, caractérisé en ce que des moyens (100;136,250,252,250′,252′) sont prévus pour intercaler dans le circuit entre une chambre (14,16) du vérin (10) et le réservoir de fluide à basse pression (24) une restriction (122,130;250,250′) pour freiner le mouvement de retour du piston (12) du vérin (10) dans sa position de repos en cas de défaillance.

9. Dispositif selon la revendication 8, caractérisé en ce que les moyens pour freiner le mouvement de retour du piston (12) du vérin (10) dans sa position de repos sont constitués par un distributeur (100) à tiroir (102), le tiroir (102) se déplaçant d'une première position où il permet le libre passage du fluide sous basse pression vers le réservoir (24) dans une deuxième position où il présente, lors d'une défaillance des moyens de commande électrique, au moins une restriction (122,130) ralentissant l'écoulement du fluide vers le réservoir (24).

10. Dispositif selon la revendication 8, caractérisé en ce que les moyens pour freiner le mouvement de retour du piston (12) du vérin (10) dans sa position de repos sont constitués par un circuit comprenant au moins une restriction (250,250′) et au moins un clapet anti-retour (252,252′) interrompant, en cas de défaillance, la communication vers le réservoir de fluide à basse pression (24) pour l'établir au travers de la restriction (250,250′) et ralentir l'écoulement du fluide vers le réservoir (24).

## Claims

1. Device for controlling a dual-acting hydraulic actuator (10) comprising, in a main circuit, a distributor assembly (28, 28', 150) controlled by electrical means, comprising, for each chamber (14, 16) of the actuator (10), a three-way solenoid valve (28, 28') and a controlled valve (160, 160') controlling the bringing of each of the two chambers (14, 16) of the actuator (10) selectively into register with a source of fluid (20, 26) under high pressure, or with a tank (24) of fluid at low pressure, and an auxiliary circuit (42, 200, 78, 84) controlled by means (76) which are sensitive to the position of the piston (12) of the actuator, characterized in that, in the event of failure, one of the chambers (14, 16) of the actuator (10) is brought into register with the source (26) of fluid under high pressure by the auxiliary circuit (42, 200, 78, 84) controlling one of the controlled valves (160, 160') of the main circuit, the other chamber of the actuator being brought into register with the tank (24) of fluid at low pressure by the main circuit controlled by the auxiliary circuit in order to cause the piston (12) of the actuator (10) to return to its position of rest.

2. Device according to Claim 1, characterized in that the distributor assembly (28, 28', 150) of the main circuit is controlled by a distributor (200) with a spool (202) in the auxiliary circuit.

3. Device according to Claim 2, characterized in that the position of the spool (202) of the distributor (200) is controlled by the position of the piston (12) of the actuator (10).

4. Device according to Claim 3, characterized in that the spool (202) of the distributor (200) has a single land interacting with two orifices (204, 206) connected by pipes (78, 84) to the distributor assembly (28, 28', 150) of the main circuit.

5. Device according to Claim 1, characterized in that the controlled valves (160, 160') of the distributor assembly (28, 28', 150) of the main circuit form part of a controlled dual-acting valve (150).

6. Device according to Claim 5, characterized in that the controlled dual-acting valve (150) consists of a piston (152) separating a bore (154) in leaktight fashion into two first chambers (156, 156'), the piston (152) including means (158, 160, 162; 158', 160', 162) for selectively establishing or interrupting the communication between the first chambers (156, 156') and second chambers (164, 164').

7. Device according to Claim 6, characterized in that the first chambers (156, 156') are each connected to one port of the solenoid valves (28, 28') and in that the second chambers (164, 164') are each connected to a chamber (14, 16) of the actuator (10).

8. Device according to any one of the preceding claims, characterized in that means (100; 136, 250, 252, 250', 252') are provided to interpose in the circuit, between a chamber (14, 16) of the actuator (10) and the tank (24) of fluid at low pressure, a restriction (122, 130; 250, 250') in order to brake the return movement of the piston (12) of the actuator (10) in its position of rest in the event of failure.

9. Device according to Claim 8, characterized in that the means for braking the return movement of the piston (12) of the actuator (10) in its position of rest consist of a distributor (100) with a spool (102), the spool (102) moving from a first position in which it allows free passage of the fluid under low pressure towards the tank (24) into a second position in which, during failure of the electrical control means, it offers at least one restriction (122, 130) slowing down the flow of fluid towards the tank (24).

10. Device according to Claim 8, characterized in that the means for braking the return movement of the piston (12) of the actuator (10) in its position of rest consist of a circuit comprising at least one restriction (250, 250') and at least one non-return valve (252, 252') which, in the event of failure, interrupts the communication towards the tank (24) of fluid at low pressure in order to establish it through the restriction (250, 250') and slow down the flow of fluid towards the tank (24).

## Patentansprüche

1. Vorrichtung zum Steuern eines doppeltwirkenden Hydraulikzylinders (10), mit einer Verteilerbaugruppe (28, 28', 150) in einem Hauptkreis, die von elektrischen Mitteln gesteuert wird und für jede Kammer (14, 16) des Zylinders (10) ein Dreiwege-Elektroventil (28, 28') und ein gesteuertes Ventilelement (160, 160') aufweist, das die Verbindung jeder der beiden Kammern (14, 16) des Zylinders (10) wahlweise mit einer Hochdruckfluidquelle (20, 26) oder einem Niederdruckfluidvorratsbehälter (24) steuert, und einem Nebenkreis (42, 200, 78, 84), der von auf die Stellung des Kolbens (12) des Zylinders ansprechenden Mitteln (76) gesteuert wird, dadurch gekennzeichnet, daß im Falle eines Ausfalls die Verbindung von einer der Kammern (14, 16) des Zylinders (10) mit der Hochdruckfluidquelle (26) durch den Nebenkreis (42, 200, 78, 84) gewährleistet ist, der eines der gesteuerten Ventilelemente (160, 160') des Hauptkreises steuert, wobei die Verbindung der anderen Kammer des Zylinders mit dem Niederdruckfluidvorratsbehälter (24) durch den Hauptkreis gewährleistet ist, der von dem Nebenkreis gesteuert wird, um das Rückkehren des Kolbens (12) des Zylinders (10) in seine Ruhestellung zu bewirken.

2. Vorrichtung nach Anspruch 1, dadurch gekennzeichnet, daß die Verteilerbaugruppe (28, 28', 150) des Hauptkreises von einem Verteiler (200) mit Schieber (202) in dem Nebenkreis gesteuert wird.

3. Vorrichtung nach Anspruch 2, dadurch gekennzeichnet, daß die Stellung des Schiebers (202) des Verteilers (200) von der Stellung des Kolbens (12) des Zylinders (10) gesteuert wird.

4. Vorrichtung nach Anspruch 3, dadurch gekennzeichnet, daß der Schieber (202) des Verteilers (200) einen einzigen Steuersteg aufweist, der mit zwei Öffnungen (204, 206) zusammenwirkt, die durch Leitungen (78, 84) mit der Verteilerbaugruppe (28, 28', 150) des Hauptkreises verbunden sind.

5. Vorrichtung nach Anspruch 1, dadurch gekennzeichnet, daß die gesteuerten Ventilelemente (160, 160') der Verteilerbaugruppe (28, 28', 150) des Hauptkreises Teil eines gesteuerten, doppeltwirkenden Ventilelements (150) sind.

6. Vorrichtung nach Anspruch 5, dadurch gekennzeichnet, daß das gesteuerte, doppeltwirkende Ventilelement (150) durch einen Kolben (152) gebildet ist, der in dichter Weise eine Bohrung (154) in zwei erste Kammern (156, 156') unterteilt, wobei der Kolben (152) Mittel (158, 160, 162; 158', 160', 162') aufweist, um wahlweise die Verbindung zwischen den ersten Kammern (156, 156') und zweiten Kammern (164, 164') auszubilden oder zu unterbrechen.

7. Vorrichtung nach Anspruch 6, dadurch gekennzeichnet, daß die ersten Kammern (156, 156') jeweils mit einem Weg der Elektroventile (28, 28') verbunden sind und daß die zweiten Kammern (164, 164') jeweils mit einer Kammer (14, 16) des Zylinders (10) verbunden sind.

8. Vorrichtung nach einem der vorhergehenden Ansprüche, dadurch gekennzeichnet, daß Mittel (100; 136, 250, 252, 250', 252') vorgesehen sind, um in den-Kreis zwischen einer Kammer (14, 16) des Zylinders (10) und dem Niederdruckfluidvorratsbehälter (24) eine Drosselstelle (122, 130; 250, 250') einzuschalten, damit die Rückstellbewegung des Kolbens (12) des Zylinders (10) in seine Ruhestellung im Falle eines Ausfalls gebremst wird.

9. Vorrichtung nach Anspruch 8, dadurch gekennzeichnet, daß die Mittel zum Bremsen der Rückstellbewegung des Kolbens (12) des Zylinders (10) in seine Ruhestellung durch einen Verteiler (100) mit Schieber (102) gebildet sind, wobei sich der Schieber (102) von einer ersten Stellung, in der er den freien Durchgang des unter niedrigem Druck stehenden Fluids zum Vorratsbehälter (24) ermöglicht, in eine zweite Stellung verstellt, in der er bei einem Ausfall der elektrischen Steuermittel wenigstens eine Drosselstelle (122, 130) aufweist, welche das Strömen des Fluids zum Vorratsbehälter (24) verlangsamt.

10. Vorrichtung nach Anspruch 8, dadurch gekennzeichnet, daß die Mittel zum Bremsen der Rückstellbewegung des Kolbens (12) des Zylinders (10) in seine Ruhestellung durch einen Kreis gebildet sind, der wenigstens eine Drosselstelle (250, 250') und wenigstens ein Rückschlagventil (252, 252') aufweist, welches im Falle eines Ausfalls die Verbindung zum Niederdruckfluidvorratsbehälter (24) unterbricht, um diese über die Drosselstelle (250, 250') auszubilden und das Strömen des Fluids zum Vorratsbehälter (24) zu verlangsamen.
